# EUROPÄISCHE PATENTSCHRIFT

(11) **EP 1 934 575 B1**
(45) Veröffentlichungstag und Bekanntmachung des Hinweises auf die Patenterteilung: **15.09.2010**
(21) Anmeldenummer: 06805912.0
(22) Anmeldetag: 27.09.2006
(51) Int. Cl.: G01N 1/40, B01D 49/00, G01N 29/00

(54) **AKUSTISCHES KONZENTRATIONSVERFAHREN, KONZENTRATIONSVORRICHTUNG UND REAKTIONSVERFAHREN**
ACOUSTIC CONCENTRATION METHOD AND DEVICE AND A REACTION METHOD
PROCEDE ET DISPOSITIF DE CONCENTRATION ACOUSTIQUE ET PROCEDE DE REACTION

(30) Priorität: 19.10.2005 DE 102005050167
(43) Veröffentlichungstag der Anmeldung: 25.06.2008
(73) Patentinhaber: Beckman Coulter, Inc., Brea, 92821 CA (US)
(72) Erfinder: GAUER, Christoph, 81667 München (DE); MANN, Wolfgang, 95512 Neudrossenfeld (DE)
(74) Vertreter: Müller-Boré & Partner Patentanwälte
(86) Internationale Anmeldenummer: PCT/EP2006/009392
(87) Internationale Veröffentlichungsnummer: WO 2007/045336

(56) Entgegenhaltungen:
- EP-A2- 0 773 055
- WO-A-2005/072854
- US-A- 4 055 491
- US-A- 5 225 089
- US-B1- 6 221 258

## Beschreibung

Die Erfindung betrifft ein Konzentrationsverfahren zur Aufkonzentration von Material in einer Flüssigkeit, eine Konzentrationsvorrichtung zur Durchführung des Verfahrens und ein Reaktionsverfahren unter Verwendung des Konzentrationsverfahrens.

Im speziellen in der biologischen Forschung oder der Diagnostik stellt sich häufig das Problem, Materialteilchen, insbesondere Zellen oder so genannte Beads, miteinander oder mit biologischen Makromolekülen, wie Nukleinsäuren, Proteinen, Antigenen, Antikörpern etc. reagieren zu lassen. Beads bezeichnen Mikrokügelchen eines Durchmessers von einigen 100 nm bis zu einigen µm, auf die ein Reaktionsausgangstoff aufbeschichtet ist. Ein Beispiel hierfür sind Latexagglutinationsassays, wie sie z.B. in US 4,960,715 beschrieben sind. Dort werden Latexkügelchen mit einem Durchmesser von einigen 100 nm bis zu einigen µm als Beads eingesetzt und entweder mit Antigenen bzw. Antikörpern beschichtet. In der Flüssigkeitsprobe werden dann dementsprechend entweder Antikörper bzw. Antigene nachgewiesen, die mit den Molekülen auf den Beads reagieren und die Beads untereinander vernetzen können. Diese so genannte Agglutination oder Aggregation lässt sich optisch auswerten und dient zum Nachweis der Anwesenheit der Antikörper bzw. Antigene in der Probe. Im vorliegenden Text soll der Begriff "Reaktion" gegebenenfalls auch den Vemetzungsprozess zwischen den Beads umfassen.

Die Materialteilchen in der Flüssigkeit, die miteinander reagieren sollen, gelangen aufgrund von Diffusion zueinander. Dieser Prozess kann durch aktives Mischen bzw. Rühren verstärkt werden.

Wünschenswert wäre es, wenn die einzelnen Materialteilchen in der Lösung nahe zueinander gebracht werden können, um die Reaktionswahrscheinlichkeit zu erhöhen. Dies lässt sich z.B. durch eine ausreichend hohe Konzentration von Teilchen in der Lösung erreichen. Oftmals steht jedoch nicht ausreichend Material zur Verfügung, um eine wünschenswert hohe Konzentration zu erreichen. Dieses Problem stellt sich insbesondere auch, wenn man Zell-Zell-Wechselwirkungen in einer Lösung, die Reaktion von Zellen mit beschichteten Beads oder verschieden beschichteter Beads miteinander untersuchen möchte.

Auch unabhängig von einer Reaktion, bei der die Reaktionsausgangsstoffe nahe zueinander gebracht werden sollten, ist es bei manchen Anwendungen wünschenswert, eine Aufkonzentration von Materialteilchen in einer Lösung zu erreichen.

Ein bekanntes Verfahren zur Aufkonzentration ist die Verwendung von Filtern, Membranen oder anderen porösen Medien, wie es in US 6,887,384 beschrieben ist. Bei einem Filter kann es jedoch zu unspezifischen Reaktionen mit der Filterwand kommen und in der Regel sind Transmissionsmessungen an dem aufkonzentrierten Medium unmöglich.

Eine andere Möglichkeit zur Aufkonzentration ist die Zentrifugation, wie sie z.B. bei der Urananreicherung verwendet wird. Dazu muss ein Reaktionsgefäß in eine Zentrifuge eingebracht und nach der Zentrifugation wieder herausgenommen werden, um eine Messung durchführen zu können, so dass das Verfahren aufwändig ist.

Aufgabe der vorliegenden Erfindung ist es, ein Verfahren zur Aufkonzentration von Material in einer Flüssigkeit anzugeben, das einfach und kostengünstig durchzuführen ist und gegebenenfalls Messungen auch direkt in dem Konzentrationsgefäß ermöglicht.

Diese Aufgabe wird mit einem Konzentrationsverfahren zur Aufkonzentration von Material in einer Flüssigkeit mit den Merkmalen des Anspruchs 1 gelöst. Anspruch 9 ist auf ein Reaktionsverfahren zur Reaktion wenigstens zweier Reaktionsausgangsstoffe in einer Flüssigkeit gerichtet, das das erfindungsgemäße Konzentrationsverfahren einsetzt. Eine Konzentrationsvorrichtung zur Durchführung der erfindungsgemäßen Verfahren ist Gegenstand des Anspruchs 15. Unteransprüche sind auf bevorzugte Ausgestaltungen gerichtet.

Bei dem erfindungsgemäßen Konzentrationsverfahren wird eine Flüssigkeit mit darin befindlichem Material in ein Gefäß eingebracht und akustische Wellen derart in die Flüssigkeit eingestrahlt, dass in dem Gefäß ein stationäres Strömungsmuster mit Bereichen unterschiedlicher Strömungsgeschwindigkeit entsteht. Materialteilchen, z.B. Zellen oder Beads, sammeln und konzentrieren sich in Regionen der Flüssigkeit, in denen die Strömungsgeschwindigkeit minimal ist, insbesondere dort, wo sie gleich null ist. Auf diese Weise lassen sich Teilchen in unmittelbare Nähe zueinander bringen, was in diesen Bereichen zu einer Aufkonzentration mit erhöhter lokaler Konzentration führt. Anders als bei der Verwendung von akustischen Wellen zur Homogenisierung, zum Rühren oder zum Mischen von Flüssigkeit, bei der ein nicht stationäres Strömungsmuster gewünscht und z.B. durch Änderung der Amplitude und/oder der Frequenz der eingestrahlten Wellen erzeugt wird, basiert das erfindungsgemäße Konzentrationsverfahren auf dem Einsatz eines stationären Strömungsmusters, das man z.B. dadurch erreichen kann, dass Amplitude und/oder Frequenz der eingestrahlten akustischen Wellen konstant gehalten werden.

Das aufzukonzentrierende Material in der Flüssigkeit umfasst z.B. Zellen, beschichtete Beads, Teilchen bzw. andere Reaktionsausgangsstoffe.

Bereits wenn durch das stationäre Strömungsmuster Bereiche in dem Gefäß erzeugt werden, in denen die Strömungsgeschwindigkeit geringer als in der Umgebung ist, führt dies zu einer Ansammlung des Materials in diesen Bereichen. Besonders vorteilhaft ist es, wenn Bereiche mit Strömungsgeschwindigkeit nahe null, vorzugsweise gleich null erzeugt werden.

Einstrahlungsort und Einstrahlungsrichtung der akustischen Wellen sind von der verwendeten Gefäßform abhängig und können z.B. experimentell optimiert werden. In der Regel ist es ausreichend, wenn an einer Stelle des Gefäßes und in einer Richtung akustische Wellen eingekoppelt werden. Es sind jedoch auch Anwendungen möglich, bei denen akustische Wellen an unterschiedlichen Orten und/oder in unterschiedlichen Richtungen in die Flüssigkeit eingestrahlt werden, um eine Aufkonzentration in bestimmten gewünschten Bereichen des Gefäßes zu erzeugen.

Akustische Wellen lassen sich z.B. mit Hilfe eines piezoelektrischen Volumenschwingers, der sich an der Gefäßwand befindet bzw. in der Gefäßwand integriert ist, erzeugen. Besonders einfach und vorteilhaft ist der Einsatz wenigstens eines Interdigitaltransducers, wie sie aus der Hochfrequenzfiltertechnologie bekannt sind. Derartige Interdigitaltransducer, die auf piezoelektrischen Materialien aufgebracht sind, können durch Anlegen einer Frequenz von z.B. einigen bis einigen 100 MHz zur Anregung von akustischen Wellen, insbesondere Oberflächenschallwellen, in dem piezoelektrischen Material eingesetzt werden. Sie umfassen kammartig ausgebildete metallische Elektroden, die fingerartig ineinander greifen und durch Fotolithografieverfahren mit einem Fingerabstand im Bereich von z.B. 10 µm hergestellt werden können. Interdigitaltransducer werden z.B. auf piezoelektrischen Kristallen vorgesehen, um darauf Oberflächenschallwellen in an sich bekannter Weise anzuregen, wobei der doppelte Fingerabstand der kammartig ineinander greifenden metallischen Elektroden die Wellenlänge der Oberflächenschallwellen definiert, die sich in der Regel senkrecht zur Ausrichtung der Fingerelektroden ausbreiten. Wird ein solcher auf einem piezoelektrischen Substrat aufgebrachter Interdigitaltransducer z.B. über ein Koppelmedium mit der Gefäßwand in Kontakt gebracht, bewirkt die in dem piezoelektrischen Material durch Anlegen einer Hochfrequenz an den Interdigitaltransducer angeregte periodische Deformation der Oberfläche die Erzeugung von akustischen Schallwellen durch die Gefäßwand und in die Flüssigkeit.

An sich können die akustischen Wellen z.B. an der seitlichen Wand des Gefäßes eingekoppelt werden. Besonders symmetrische und einfache Verhältnisse erhält man, wenn die Einkopplung von unten erfolgt.

Die Geschwindigkeit, mit der es zu einer Aufkonzentration in dem Gefäß kommt, hängt unter anderem von der Geometrie des Gefäßes, von der gewählten Anordnung der Erzeugungseinrichtungen für die akustischen Wellen, von der eingestrahlten Leistung der akustischen Wellen, der Viskosität und dem Füllstand ab. Die Zeiten, Geometrien und die externen Strömungsparameter, wie die Leistung, die Frequenz, die Fläche der Gefäßwand, durch die die akustischen Wellen eingestrahlt werden, die Geometrie des Gefäßes und der Füllstand können assayspezifisch optimiert werden.

Aus den Bereichen minimaler Strömungsgeschwindigkeit, in denen sich das Material in der Flüssigkeit sammelt, kann das aufkonzentrierte Material abgeführt werden. Auf diese Weise lässt sich Flüssigkeit mit Material erhöhter Konzentration z.B. in ein anderes Gefäß überführen. Insbesondere kann z.B. mit Hilfe einer Pipette nur ein solches Volumenelement aus der Flüssigkeit in dem Gefäß transferiert werden, in dem die Strömungsgeschwindigkeit minimal ist und somit nach der Aufkonzentration des Materials eine lokal erhöhte Konzentration vorherrscht. Die transferierte Flüssigkeit hat dann eine erhöhte Konzentration. Typische Volumina für eine solche Aufkonzentration liegen z.B. zwischen einigen µl und einigen 100 µl.

Das erfindungsgemäße Konzentrationsverfahren kann besonders vorteilhaft eingesetzt werden, um zwei Sorten von Reaktionsausgangsstoffen in einer Flüssigkeit derart nahe zueinander zu bringen, dass die Reaktionswahrscheinlichkeit erhöht wird. In den Bereichen, in denen die Strömungsgeschwindigkeit minimal, vorzugsweise gleich null ist, sammeln sich die Reaktionsausgangsstoffe und kommen daher schneller zu einer Reaktion, als es z.B. bei einem allein diffusionsbestimmten Reaktionsverfahren der Fall wäre.

Das Reaktionsverfahren kann z.B. eingesetzt werden, um Zell-Zell-Wechselwirkungen in einer Lösung zu untersuchen oder die Reaktion von Zellen mit beschichteten Beads bzw. verschieden beschichtete Beads untereinander. Die Reaktionsprodukte, die sich in den Bereichen minimaler Strömungsgeschwindigkeit befinden, können dann direkt abgeführt werden, z.B. mit einer Pipette abgesaugt werden. Das erfindungsgemäße Reaktionsverfahren bietet jedoch insbesondere den Vorteil, dass durch direktes Beobachten eines Bereiches minimaler Strömungsgeschwindigkeit, in dem eine Reaktion bevorzugt stattfindet, da die Reaktionspartner durch die Aufkonzentration nahe beieinander sind, die Reaktion direkt ausgewertet werden kann. Dies kann z.B. mit Hilfe von optischen Verfahren geschehen, insbesondere Messung der Fluoreszenz der entsprechenden Bereiche.

Insbesondere kann das erfindungsgemäße Reaktionsverfahren derart eingesetzt werden, dass sich beide Reaktionsausgangsstoffe einer Reaktion in den Bereichen mit minimaler Strömungsgeschwindigkeit sammeln um so die Reaktionswahrscheinlichkeit zu erhöhen. Bei einer anderen besonders vorteilhaften Ausgestaltung werden so genannte Beads eingesetzt, d.h. Mikrokügelchen eines Durchmessers von einigen 100 nm bis zu einigen µm, auf die einer der Reaktionsausgangsstoffe aufbeschichtet ist. Z.B. kann es sich bei diesem aufbeschichteten Reaktionsausgangsstoff um Antikörper bzw. Antigene handeln. Befinden sich in der Flüssigkeit, in der die Beads eingebracht sind, die entsprechenden komplementären Antigene bzw. Antikörper, binden diese an die Beschichtung der Beads und können zu einer Vernetzung der Beads führen. Diese Agglutination lässt sich optisch auswerten, so dass auf die Anwesenheit der Antikörper bzw. Antigene zu den auf den Beads beschichteten Antigenen bzw. Antikörpern geschlossen werden kann. Durch Verwendung des erfindungsgemäßen Aufkonzentrationsverfahrens werden die Beads in den Bereichen minimaler Strömungsgeschwindigkeit aufkonzentriert, so dass die Vernetzung gefördert und beschleunigt wird.

Die Erfindung betrifft weiterhin eine Konzentrationsvorrichtung zur Durchführung des erfindungsgemäßen Konzentrationsverfahrens bzw. des erfindungsgemäßen Reaktionsverfahrens. Die erfindungsgemäße Konzentrationsvorrichtung weist eine Einrichtung oder mehrere Einrichtungen zur Erzeugung akustischer Wellen auf, die derart angeordnet ist bzw. sind, dass durch mit ihr bzw. ihnen erzeugten akustischen Wellen ein stationäres Strömungsmuster in der Flüssigkeit erzeugt werden kann.

Eine erfindungsgemäße Konzentrationsvorrichtung kann insbesondere in einem entsprechend ausgestalteten Automaten verwendet werden, in dem die Einrichtung bzw. die Einrichtungen zur Erzeugung akustischer Wellen mithilfe einer automatischen Steuerung gesteuert wird bzw. werden. Die Steuerung umfasst zum Beispiel einen Mikroprozessor, der derart programmiert ist, dass die Energiezufuhr zu den Einrichtungen zur Erzeugung akustischer Wellen derart gesteuert wird, dass sich das gewünschte stationäre Strömungsmuster einstellt. Der dazu notwendige zu programmierende Verfahrensablauf kann zum Beispiel im Vorhinein durch Experimente bestimmt werden.

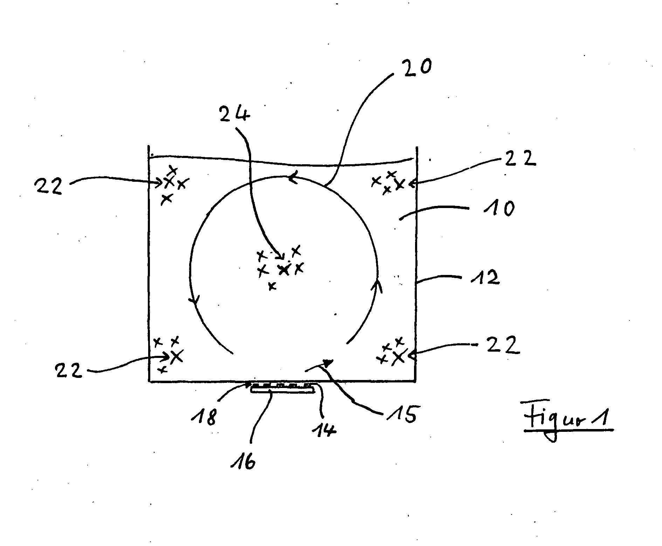

Die Erfindung wird anhand der Fig. 1 im Detail erläutert, die in schematischer Darstellung eine Anordnung zur Durchführung des erfindungsgemäßen Verfahrens zeigt.

In dem Reaktionsgefäß 12 befindet sich eine Flüssigkeit 10, in der sich z.B. mit Antikörpern bzw. Antigenen beschichtete Beads befinden. An dem Gefäßboden ist bei der gezeigten Ausführungsform als Schallerzeuger ein piezoelektrisches Substrat 16, das z.B. einen Lithiumniobatkristall umfasst, mit einem darauf aufgebrachten Interdigitaltransducer 14 angeordnet. Mit Bezugsziffer 18 ist ein Koppelmedium bezeichnet, z.B. Wasser, Öl, Glyzerin, Silikon, Epoxydharz oder ein Gelfilm, um Unebenheiten auszugleichen und eine optimale Ankopplung zu gewährleisten. Zum Anschluss der Elektroden des Interdigitaltransducers 14 sind in an sich bekannter Weise elektrische Zuleitungen zu einer Hochfrequenzquelle vorgesehen, die in Fig. 1 nicht dargestellt sind. Die Darstellung des Interdigitaltransducers 14 ist nur schematisch. So ist die Anzahl der ineinander greifenden Finger des Interdigitaltransducers in an sich bekannter Weise sehr viel höher als dargestellt. In Fig. 1 ist der seitliche Schnitt durch die kammartig ineinander greifenden Fingerelektroden des Interdigitaltransducers 14 schematisch angedeutet.

Bei Anlegen eines elektrischen Wechselfeldes an die Elektroden des Interdigitaltransducers 14 wird eine Oberflächenschallwelle in dem piezoelektrischen Kristall 16 erzeugt. Über das Koppelmedium 18 und die Gefäßwand bewirkt dies die Erzeugung von akustischen Wellen in der Flüssigkeit 10.

Die gezeigte Anordnung soll eine Interdigitaltransducergeometrie umfassen, die zu einer gerichteten Einstrahlung von akustischen Wellen in die Flüssigkeit 10 in Richtung des Pfeils 15 führt. Dies lässt sich z.B. durch die Auswahl eines unidirektional abstrahlenden Transducers erreichen, der nur in eine Richtung abstrahlt.

Alternativ kann z.B. ein bidirektional abstrahlender Interdigitaltransducer eingesetzt werden, der nicht symmetrisch an dem Gefäß angeordnet ist. Möglich ist z.B. die Anordnung eines bidirektional abstrahlenden Interdigitaltransducers an einer Ecke des Gefäßes, so dass nur eine der zwei Abstrahlrichtungen in das Gefäß hinein gerichtet ist. Schließlich können Geometrien realisiert werden, bei denen eine Abstrahlrichtung eines bidirektional abstrahlenden Interdigitaltransducers gezielt absorbiert oder reflektiert wird.

In Fig. 1 bezeichnet 20 in schematischer Weise eine stationäre Strömung, die durch die Einstrahlung akustischer Wellen in Richtung des Pfeils 15 erzeugt wird. 22 und 24 bezeichnen bereits aufkonzentriertes Material in der Flüssigkeit 10, z.B. beschichtete Beads.

Die gezeigte Vorrichtung kann wie folgt eingesetzt werden. Geschildert wird ein Beispiel, an dem in einer Flüssigkeit bestimmte Antikörper nachgewiesen werden sollen. Dazu werden Beads mit den entsprechenden Antigenen zu diesen Antikörpern beschichtet und in die Flüssigkeit 10 in dem Gefäß 12 eingebracht. Anlegen eines elektrischen Wechselfeldes an den unidirektional abstrahlenden Interdigitaltransducer 14 bewirkt die Einstrahlung einer Schallwelle in Richtung des Pfeiles 15. Dies führt zu der Ausbildung eines stationären Strömungsmusters, das schematisch mit 20 bezeichnet ist. Die Strömungsgeschwindigkeit fällt von dem Strömungspfad 20 nach außen und nach innen ab. In den Bereichen der Strömungsgeschwindigkeit null sammeln sich die mit den Antigenen beschichteten Beads. Dies ist für Bereiche an der Gefäßwand schematisch durch die Kreuze mit der Bezugsziffer 22 und für das Zentrum des Gefäßes durch die Kreuze mit der Bezugsziffer 24 dargestellt. Sind in der Flüssigkeit 10 zu den auf den Beads beschichteten Antigenen entsprechende Antikörper vorhanden, binden diese an die Antigene, die auf den Beads beschichtet sind, so dass die Beads miteinander vernetzen können. Durch die hohe Konzentration der Beads 22, 24 in den Bereichen minimaler Strömungsgeschwindigkeit wird dieser Vernetzungsvorgang gefördert und beschleunigt.

Die Vernetzung bzw. Agglutination in den Bereichen minimaler Strömungsgeschwindigkeit kann optisch ausgewertet werden und so zum Nachweis der Anwesenheit der den auf den Beads beschichteten Antigenen entsprechenden Antikörpern dienen.

Bei einer nicht gezeigten Ausführungsform wird kein Interdigitaltransducer verwendet, sondern ein piezoelektrischer Volumenschwinger, der z.B. derart angeordnet ist, dass eine schräge Einkopplung der Schallwelle stattfindet.

### Bezugszeichenliste

- 10: Flüssigkeit mit aufzukonzentrierendem Material
- 12: Gefäß
- 14: Interdigitaltransducer
- 15: Richtung eingestrahlter akustischer Wellen
- 16: piezoelektrisches Substrat
- 18: Koppelmedium
- 20: stationärer Strömungspfad
- 22, 24: aufkonzentriertes Material

## Patentansprüche

1. Konzentrationsverfahren zur Aufkonzentration von Material in einer Flüssigkeit, bei dem
- eine Flüssigkeit (10) mit darin befindlichem Material in ein Gefäß (12) eingebracht wird und
- akustische Wellen derart in die Flüssigkeit eingestrahlt werden, dass in dem Gefäß (12) ein stationäres Strömungsmuster (20) mit Bereichen unterschiedlicher Strömungsgeschwindigkeit entsteht, wobei sich das Material (22, 24) in Bereichen minimaler Strömungsgeschwindigkeit sammelt.

2. Konzentrationsverfahren nach Anspruch 1, bei dem die akustischen Wellen derart eingestrahlt werden, dass wenigstens ein Bereich mit Strömungsgeschwindigkeit nahe null, vorzugsweise gleich null entsteht.

3. Konzentrationsverfahren nach einem der Ansprüche 1 oder 2, bei dem akustische Wellen an einem Ort und/oder in einer Richtung in die Flüssigkeit (10) eingestrahlt werden.

4. Konzentrationsverfahren nach einem der Ansprüche 1 bis 3, bei dem die Orte der Einstrahlung und/oder die Richtung der Einstrahlung der akustischen Wellen derart ausgewählt werden, dass sich mehrere Bereiche in der Flüssigkeit mit der Strömungsgeschwindigkeit nahe null, vorzugsweise gleich null einstellen.

5. Konzentrationsverfahren nach einem der Ansprüche 1 bis 4, bei dem zur Erzeugung der akustischen Wellen zumindest ein Interdigitaltransducer (14) auf einem piezoelektrischen Substrat (16) eingesetzt wird.

6. Konzentrationsverfahren nach einem der Ansprüche 1 bis 5, bei dem die akustischen Wellen zumindest zum Teil von unten in die Flüssigkeit (10) eingestrahlt werden.

7. Konzentrationsverfahren nach einem der Ansprüche 1 bis 6, bei dem Flüssigkeit mit aufkonzentriertem Material aus Bereichen mit minimaler Strömungsgeschwindigkeit, vorzugsweise aus Bereichen mit Strömungsgeschwindigkeit null, aus dem Gefäß (12) entfernt wird.

8. Konzentrationsverfahren nach Anspruch 7, bei dem die Flüssigkeit mit aufkonzentriertem Material mit Hilfe einer Pipette abgesaugt wird.

9. Reaktionsverfahren zur Reaktion wenigstens zweier Reaktionsausgangsstoffe in einer Flüssigkeit, bei dem die Flüssigkeit (10) unter Verwendung eines Konzentrationsverfahrens nach einem der Ansprüche 1 bis 6 derart aufkonzentriert wird, dass wenigstens einer der Reaktionsausgangsstoffe (22, 24) sich in wenigstens einem Bereich mit Strömungsgeschwindigkeit nahe null, vorzugsweise gleich null sammelt.

10. Reaktionsverfahren nach Anspruch 9, bei dem wenigstens zwei Reaktionsausgangsstoffe in der Flüssigkeit mit Hilfe des Konzentrationsverfahrens aufkonzentriert werden.

11. Reaktionsverfahren nach einem der Ansprüche 9 oder 10, bei dem wenigstens einer der Reaktionsausgangsstoffe auf Beads (22, 24) beschichtet ist.

12. Reaktionsverfahren nach Anspruch 11, bei dem die Reaktion durch Beobachtung der Agglutination bzw. Aggregation von Beads (22, 24) ausgewertet wird, die durch die Reaktion des wenigstens einen auf die Beads beschichteten Reaktionsausgangsstoffes mit einem Reaktionsausgangsstoff in der Flüssigkeit ermöglicht wird.

13. Reaktionsverfahren nach einem der Ansprüche 9 bis 12, bei dem die Reaktion durch Beobachten wenigstens eines Bereiches einer minimalen Strömungsgeschwindigkeit, vorzugsweise einer Strömungsgeschwindigkeit nahe null, ausgewertet wird.

14. Reaktionsverfahren nach Anspruch 13, bei dem die Reaktion mit Hilfe von optischen Verfahren, insbesondere durch Messung der Fluoreszenz, ausgewertet wird.

15. Konzentrationsvorrichtung zur Durchführung eines Verfahrens nach einem der Ansprüche 1 bis 14, mit einem Gefäß (12) zur Aufnahme der Flüssigkeit (10), das eine Einrichtung (14) oder mehrere Einrichtungen zur Erzeugung akustischer Wellen aufweist, die derart angeordnet ist/ sind, dass durch mit ihr/ ihnen erzeugten akustischen Wellen ein stationäres Strömungsmuster (20) in der Flüssigkeit (10) erzeugt werden kann.

16. Konzentrationsvorrichtung nach Anspruch 15, bei der die wenigstens eine Einrichtung zur Erzeugung akustischer Wellen zumindest einen Interdigitaltransducer (14) auf einem piezoelektrischen Substrat (16) umfasst.

17. Konzentrationsvornchtung nach einem der Ansprüche 15 oder 16, bei der wenigstens eine Einrichtung zur Erzeugung akustischer Wellen an der Unterseite des Gefäßes (12) vorgesehen ist.

## Claims

1. A concentration method for the concentration of material in a liquid, wherein
- a liquid (10) with material situated therein is introduced into a vessel (12); and
- acoustic waves are irradiated into the liquid in such a way that a stationary flow pattern (20) with regions of different flow velocity is formed in the vessel (12), wherein the material (22,24) accumulates in regions of minimal flow velocity.

2. A concentration method according to Claim 1, wherein the acoustic waves are irradiated so that at least one region is formed with a flow velocity close to zero, preferably equal to zero.

3. A concentration method according to either Claim 1 or Claim 2, wherein acoustic waves are irradiated into the liquid (10) at one location and/or in one direction.

4. A concentration method according to any one of Claims 1 to 3, wherein the locations of the irradiation and/or the direction of the irradiation of the acoustic waves are selected so that a plurality of regions are established in the liquid with the flow velocity close to zero, preferably equal to zero.

5. A concentration method according to any one of Claims 1 to 4, wherein at least one interdigital transducer (14) on a piezoelectric substrate (16) is used to generate the acoustic waves.

6. A concentration method according to any one of Claims 1 to 5, wherein at least some of the acoustic waves are irradiated into the liquid (10) from below.

7. A concentration method according to any one of Claims 1 to 6, wherein liquid with concentrated material is removed from the vessel (12) from regions with minimal flow velocity, preferably from regions with zero flow velocity.

8. A concentration method according to Claim 7, wherein the liquid with concentrated material is drawn off by means of a pipette.

9. A reaction method for the reaction of at least two reaction starting materials in a liquid, wherein the liquid (10) is concentrated using a concentration method according to any one of Claims 1 to 6 in such a way that at least one of the reaction starting materials (22,24) accumulates in at least one region with a flow velocity close to zero, preferably equal to zero.

10. A reaction method according to Claim 9, wherein at least two reaction starting materials in the liquid are concentrated by means of the concentration method.

11. A reaction method according to either Claim 9 or Claim 10, wherein at least one of the reaction starting materials is coated on beads (22,24).

12. A reaction method according to Claim 11, wherein the reaction is evaluated by observation of the agglutination or aggregation of beads (22,24), which is made possible by the reaction of the at least one reaction starting material coated on to the beads with a reaction starting material in the liquid.

13. A reaction method according to any one of Claims 9 to 12, wherein the reaction is evaluated by observation of at least one region of a minimal flow velocity, preferably of a flow velocity close to zero.

14. A reaction method according to Claim 13, wherein the reaction is evaluated by means of optical methods, in particular by measurement of the fluorescence.

15. A concentration apparatus for carrying out a method according to any one of Claims 1 to 14, with a vessel (12) for receiving the liquid (10), which has a device (14) or a plurality of devices for the generation of acoustic waves which is/are arranged in such a way that a stationary flow pattern (20) can be created in the liquid (10) by acoustic waves generated therewith.

16. A concentration apparatus according to Claim 15, wherein the at least one device for the generation of acoustic waves comprises at least one interdigital transducer (14) on a piezoelectric substrate (16).

17. A concentration apparatus according to either Claim 15 or Claim 16, wherein at least one device for the generation of acoustic waves is provided on the underside of the vessel (12).

## Revendications

1. Procédé de concentration pour l'augmentation de la concentration d'un matériau dans un liquide, dans lequel
- un liquide (10) dans lequel se trouve un matériau est placé dans un récipient (12) et
- des ondes acoustiques sont émises vers le liquide afin de faire apparaître, dans le récipient (12), une structure d'écoulement stationnaire (20) avec des zones de vitesse d'écoulement différente, le matériau (22, 24) s'accumulant dans les zones de vitesse d'écoulement minimale.

2. Procédé de concentration selon la revendication 1, dans lequel les ondes acoustiques sont émises de façon à ce qu'au moins une zone avec une vitesse d'écoulement proche de zéro, de préférence égale à zéro, apparaisse.

3. Procédé de concentration selon l'une des revendications 1 ou 2, dans lequel des ondes acoustiques sont émises dans le liquide (10) à un endroit et/ou dans une direction.

4. Procédé de concentration selon l'une des revendications 1 à 3, dans lequel les endroits d'émission et/ou la direction de l'émission des ondes acoustiques sont choisis de façon à ce que plusieurs zones de vitesse d'écoulement proche de zéro, de préférence égale à zéro, apparaissent dans le liquide.

5. Procédé de concentration selon l'une des revendications 1 à 4, dans lequel, pour la production des ondes acoustiques, au moins un transducteur interdigital (14) sur un substrat piézoélectrique (16) est utilisé.

6. Procédé de concentration selon l'une des revendications 1 à 5, dans lequel les ondes acoustiques sont émises dans le liquide (10) au moins partiellement par en bas.

7. Procédé de concentration selon l'une des revendications 1 à 6, dans lequel le liquide contenant du matériau concentré provenant de zones avec une vitesse d'écoulement minimale, de préférence de zones à vitesse d'écoulement nulle, est prélevé dans le récipient (12).

8. Procédé de concentration selon la revendication 7, dans lequel le liquide contenant du matériau concentré est aspiré à l'aide d'une pipette.

9. Procédé de réaction permettant la mise en réaction d'au moins deux réactifs de départ dans un liquide, dans lequel le liquide (10) est concentré, à l'aide d'un procédé de concentration selon l'une des revendications 1 à 6, de façon à ce qu'au moins un des réactifs de départ (22, 24) s'accumule dans au moins une zone à vitesse d'écoulement proche de zéro, de préférence égale à zéro.

10. Procédé de réaction selon la revendication 9, dans lequel au moins deux réactifs de départ sont concentrés dans le liquide à l'aide du procédé de concentration.

11. Procédé de réaction selon l'une des revendications 9 ou 10, dans lequel au moins un des deux réactifs de départ est appliqué sur des billes (22, 24).

12. Procédé de réaction selon la revendication 11, dans lequel la réaction est analysée en observant l'agglutination ou l'agrégation des billes (22, 24), due à la réaction d'au moins un réactif de départ appliqué sur des billes avec un réactif de départ dans le liquide.

13. Procédé de réaction selon l'une des revendications 9 à 12, dans lequel la réaction est analysée en observant au moins une zone à vitesse d'écoulement minimale, de préférence à vitesse d'écoulement proche de zéro.

14. Procédé de réaction selon la revendication 13, dans lequel la réaction est analysée à l'aide de procédés optiques, notamment en mesurant la fluorescence.

15. Dispositif de concentration pour la réalisation d'un procédé selon l'une des revendications 1 à 14, avec un récipient (12) pour contenir le liquide (10), qui comprend un dispositif (14) ou plusieurs dispositifs permettant de générer des ondes acoustiques, conçus de façon à ce que les ondes acoustiques qu'ils génèrent permettent de produire une structure d'écoulement stationnaire (20) dans le liquide (10).

16. Dispositif de concentration selon la revendication 15, dans lequel le dispositif de production d'ondes acoustiques comprend au moins un transducteur interdigital (14) sur un substrat piézoélectrique (16).

17. Dispositif de concentration selon l'une des revendications 15 ou 16, dans lequel au moins un dispositif est prévu pour la production d'ondes acoustiques sur le côté inférieur du récipient (12).
